# EUROPEAN PATENT APPLICATION

(11) **EP 4 746 238 A1**
(43) Date of publication of application: **20.05.2026**
(21) Application number: 24900837.6
(22) Date of filing: 23.10.2024
(51) Int. Cl.: H02J 7/00, H01M 10/42

(54) **BATTERY SYSTEM**

(30) Priority: 05.12.2023 KR 20230174491
(71) Applicant: LG Energy Solution, Ltd., Seoul 07335 (KR)
(72) Inventor: KIM, Tae Hoon, Daejeon 34122 (KR)
(74) Representative: Plasseraud IP
(86) International application number: PCT/KR2024/016159
(87) International publication number: WO 2025/121649

(57) **Abstract**

A battery system includes: a plurality of battery packs that includes a plurality of battery cells; a plurality of battery management systems that are connected to the plurality of battery packs; and a rack battery management system that transmits a control command to the plurality of battery management systems and receives a plurality of monitoring information from the plurality of battery management systems in response to the control command. Each of the plurality of battery management systems includes two battery management ICs connected to battery packs corresponding thereto among the plurality of battery packs to generate monitoring information for the corresponding battery packs according to the control command and a dual transformer including a first winding connected to a first battery management IC among the two battery management ICs and a second winding connected to a second battery management IC among the two battery management ICs, and a ground of the first winding and a ground of the second winding are separated from each other.

## Description

### [Technical Field]

### Cross-reference to related application(s)

This application claims priority to and the benefit of Korean Patent Application No. 10-2023-0174491 filed with the Korean Intellectual Property Office on December 5, 2023, the entire contents of which are incorporated herein by reference.

### The present disclosure relates to a battery system.

### [Background Art]

A battery management system (BMS) may be connected to a plurality of battery cells constituting a battery pack to monitor the plurality of battery cells and control charging and discharging of the battery pack. The number of battery management ICs (BMICs) monitoring the plurality of battery cells may be two or more according to the number of the plurality of battery cells.

A transformer may be used for two or more BMICs to transmit and receive information to and from the outside of the BMS. An insulation distance between a high voltage side and a low voltage side of the transformer should be secured, and a transformer corresponding to each of the two or more BMICs is required. Then, a problem arises that a size of a PCB on which the BMS is mounted increases and a cost of manufacturing the BMS also increases.

### [Disclosure]

### [Technical Problem]

The present disclosure is intended to provide a battery system capable of minimizing an increase in a size of a PCB and an increase in a manufacturing cost when a battery management system (BMS) including two or more battery management ICs (BMICs) is manufactured.

### [Technical Solution]

A battery system according to a feature of the present disclosure includes: a plurality of battery packs that includes a plurality of battery cells; a plurality of battery management systems that are connected to the plurality of battery packs; and a rack battery management system that transmits a control command to the plurality of battery management systems and receives a plurality of monitoring information from the plurality of battery management systems in response to the control command. Each of the plurality of battery management systems includes two battery management ICs connected to battery packs corresponding thereto among the plurality of battery packs to generate monitoring information for the corresponding battery packs according to the control command and a dual transformer including a first winding connected to a first battery management IC among the two battery management ICs and a second winding connected to a second battery management IC among the two battery management ICs, and a ground of the first winding and a ground of the second winding are separated from each other.

A first dual transformer of a first battery management system among the plurality of battery management systems may include a third winding insulated from and linked to the first winding and connected to the rack battery management system and a fourth winding insulated from and linked to the second winding and connected to a second battery management system among the plurality of battery management systems. The second battery management system may include: a second dual transformer that includes a fifth winding insulated from and linked to the fourth winding and a sixth winding insulated from and linked to the fifth winding; and a third battery management IC that is connected to the sixth winding. The second battery management system may further include a fourth battery management IC that is connected to a battery pack corresponding thereto among the plurality of battery packs, the second dual transformer may further include a seventh winding insulated from and linked to the fourth battery management IC and an eighth winding insulated from and linked to the seventh winding, a ground of the sixth winding and a ground of the seventh winding may be separated from each other, and each of the third battery management IC and the fourth battery management IC may be connected to a half of a plurality of battery cells of the corresponding battery pack.

The first battery management system may include a ninth winding and a tenth winding insulated and linked between the first battery management IC and the second battery management IC. A signal transmitted to the third winding may be provided to the first battery management IC through the first winding, the first battery management IC may transfer the signal to the second battery management IC through the ninth winding and the tenth winding, and the second battery management IC may transmit the signal to the second battery management system through the second winding and the fourth winding. The signal transmitted to the third winding may indicate the control command. A first signal transmitted from the second battery management system to the fourth winding may be provided to the second battery management IC through the second winding, the second battery management IC may transfer a second signal adding monitoring information generated by the second battery management IC to the first signal to the first battery management IC through the ninth winding and the tenth winding, and the first battery management IC may transmit a third signal adding monitoring information generated by the first battery management IC to the second signal to the rack battery management system through the first winding and the third winding. The first signal may include monitoring information of the second battery management system.

The second battery management system may include a third battery management IC and a fourth battery management IC connected to a battery pack corresponding thereto, a second dual transformer including a fifth winding connected to the fourth winding, a sixth winding insulated from and linked to the fifth winding and connected to the third battery management IC, a seventh winding connected to the fourth battery management IC, and an eighth winding insulated from and linked to the seventh winding, and an eleventh winding and a twelfth winding insulated and linked between the third battery management IC and the fourth battery management IC, and a ground of the sixth winding and a ground of the seventh winding may be separated from each other. A signal transmitted to the fifth winding may be provided to the third battery management IC through the sixth winding, the third battery management IC may transfer the signal to the fourth battery management IC through the eleventh winding and the twelfth winding, and the fourth battery management IC may transmit the signal to a third battery management system among the plurality of battery management systems through the seventh winding and the eighth winding. A first signal transmitted from a third battery management system among the plurality of battery management systems to the eighth winding may be provided to the fourth battery management IC through the seventh winding, the fourth battery management IC may transfer a second signal adding monitoring information generated by the fourth battery management IC to the first signal to the third battery management IC through the eleventh winding and the twelfth winding, and the third battery management IC may transmit a third signal adding monitoring information generated by the third battery management IC to the second signal to the first battery management system through the fifth winding and the sixth winding. The first signal may include monitoring information of the third battery management system.

The dual transformer of each of the plurality of battery management systems may further include a third winding insulated from and linked to the first winding and connected to the rack battery management system and a fourth winding insulated from and linked to the second winding and connected to the rack battery management system.

### [Advantageous Effects]

The present disclosure may provide a battery system capable of minimizing an increase in a size of a PCB and an increase in a manufacturing cost when a battery management system (BMS) including two or more battery management ICs (BMICs) is manufactured.

### [Description of the Drawings]

FIG. 1 is a block diagram showing a battery system according to an embodiment.
FIG. 2 is a view showing some configurations of the battery system according to an embodiment.
FIG. 3 illustrates configurations for communication between a plurality of battery management integrated circuits (BMICs) according to an embodiment.
FIG. 4 shows a transmission order of a control command from an MCU to the plurality of BMICs according to an embodiment.
FIG. 5 shows a transmission order of monitoring information from the plurality of BMICs to the MCU according to an embodiment.
FIG. 6 is a block diagram showing a battery system according to an embodiment.
FIG. 7 is a view showing some configurations of the battery system according to an embodiment.

### [Mode for Invention]

If it is determined that a detailed description of a related known technology may obscure a gist of an embodiment disclosed in the present specification in describing the embodiment disclosed in the present specification, a detailed description thereof will be omitted. The accompanying drawings are only for easy understanding of the embodiment disclosed in the present specification, a technical idea disclosed in the present specification is not limited by the accompanying drawings, and the present disclosure should be understood to include all changes, equivalents, or substitutes included in the spirit and technical scope of the present disclosure.

Terms including ordinal numbers such as "first" and "second" may be used to describe various constituent elements, but the constituent elements are not limited by the terms. The terms may be used for a purpose of distinguishing one constituent element from other constituent elements.

When it is stated that a constituent element is "coupled to" or "connected to" to another constituent element, it should be understood that the constituent element may be directly coupled to or connected to the other constituent element but another constituent element may exist between the constituent element and the other constituent element. In contrast, when it is stated that a constituent element is "directly coupled to" or "directly connected to" another constituent element, it should be understood that a constituent element does not exist between the constituent element and the other constituent element.

In the present application, it should be understood that a term such as "include" or "have" is intended to indicate the presence of a feature, number, step, operation, constituent element, part, or a combination thereof described in the specification and it does not preclude the possibility of the presence or addition of one or more other features, numbers, steps, operations, constituent elements, parts, or combinations thereof.

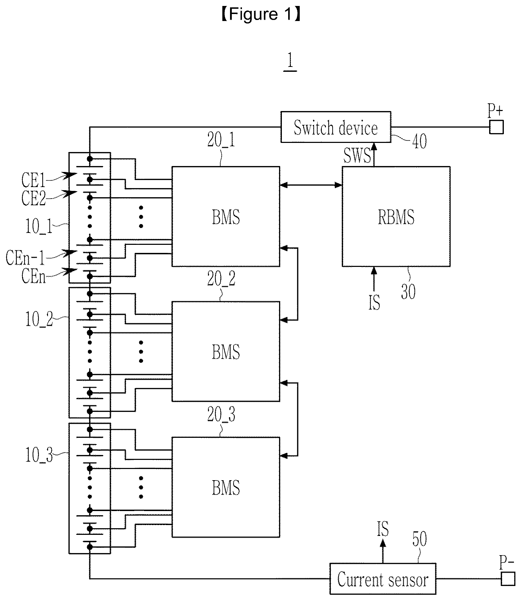

FIG. 1 is a block diagram showing a battery system according to an embodiment.

A battery system 1 may include a plurality of battery packs 10_1-10_3, a plurality of BMSs 20_1-20_3, a rack battery management system (RBMS) 30, a switch device 40, and a current sensor (or an electric current sensor) 50. In FIG. 1, the battery system 1 is illustrated as including three battery packs 10_1-10_3, but the present disclosure is not limited thereto. The present disclosure may be applied to a battery system including two or more battery packs.

The plurality of battery packs 10_1-10_3 may be connected in series between two output terminals P+ and P- of the battery system 1. Each of the plurality of battery packs 10_1-10_3 may include a plurality of battery cells (e.g., CE1-CEn) connected in series (n is a natural number greater than or equal to 2).

Each of the plurality of BMSs 20_1, 20_2, and 20_3 may be connected to each of the plurality of battery packs 10_1-10_3, may measure a cell voltage of each of the plurality of battery cells CE1-CEn of the battery pack, and may transmit cell voltages of the plurality of battery cells CE1-CEn of each of the plurality of battery packs 10_1-10_3 to the rack BMS 30. Although not shown in FIG. 1, the battery system 1 may further include a plurality of temperature sensors for each measuring temperatures of the plurality of battery packs 10_1-10_3, a plurality of current sensors for each measuring currents flowing through the plurality of battery packs 10_1-10_3, and the like. The plurality of temperature sensors may provide signals indicating the measured temperatures to the plurality of BMSs 20_1, 20_2, and 20_3 or the rack BMS 30. The plurality of current sensors may provide signals indicating the measured currents to the rack BMS 30 to the plurality of BMSs 20_1, 20_2, and 20_3 or the rack BMS 30. If the plurality of BMSs 20_1, 20_2, and 20_3 receive the signals from the plurality of temperature sensors and the plurality of current sensors, the rack BMS 30 may request information on the temperature and the current from a plurality of BMSs 20_1, 20_2, and 20_3 according to a daisy chain method, and the plurality of BMSs 20_1, 20_2, and 20_3 may transmit values according to the received signals to the rack BMS 30. In the following description, information provided from the BMS to the rack BMS may be monitoring information including at least one of a cell voltage, a pack temperature, a pack current, and the like.

The rack BMS 30 may transmit a control command to the plurality of BMSs 20_1, 20_2, and 20_3. The plurality of BMSs 20_1, 20_2, and 20_3 may perform an operation according to the received control command, and may transmit information obtained by the performed operation (e.g., the monitoring information) to the rack BMS 30. FIG. 1 illustrates that the rack BMS 30 transmits a control command to the plurality of BMSs 20_1, 20_2, and 20_3 according to a daisy chain method and receives a response to the control command from the plurality of BMSs 20_1, 20_2, and 20_3. The daisy chain method is an example of a communication method applicable to the present disclosure, and the present disclosure is not limited thereto. The rack BMS 30 may generate a control command (e.g., a command to measure the voltages of the plurality of battery cells), and the control command may be transmitted in an order of the BMS 20_1, the BMS 20_2, and the BMS 20_3 according to the daisy chain method. The BMS 20_3 that is the last in the transmission order may recognize that there is no BMS to transfer the control command, may generate a plurality of cell voltage values of the battery pack 10_3 by performing an operation (e.g., measurement of a plurality of battery cell voltages) according to the received control command, and may transmit the plurality of cell voltage values of the battery pack 10_3 to the BMS 20_2 in response to the control command. The BMS 20_2 may also generate a plurality of cell voltage values of the battery pack 10_2 according to the control command, and may transmit the plurality of cell voltage values of the battery pack 10_2 to the BMS 10_1 together with the plurality of cell voltage values of the battery pack 10_3 received from the BMS 20_3. The BMS 20_1 may also generate a plurality of cell voltage values of the battery pack 10_1 according to the control command, and may transmit the plurality of cell voltage values of the battery pack 10_1 to the rack BMS 30 together with the plurality of cell voltage values of the two battery packs 10_2 and 10_3 received from the BMS 20_2.

The rack BMS 30 may control a switching operation of the switch device 40 based on information received from the plurality of BMSs 20_1, 20_2, and 20_3 and information provided from the outside. The rack BMS 30 may close the switch device 40 for a discharging operation that supplies electric power to the outside from the plurality of battery packs 10_1-10_3 and a charging operation that supplies electric power to the outside from the plurality of battery packs 10_1-10_3, and may open the switch device 40 when there is a problem with the plurality of battery packs 10_1-10_3 or in a rest state where there is no electric power operation. The rack BMS 30 may provide a switching signal SWS to the switch device 40 that controls the switching operation of the switch device 40.

The current sensor 50 may measure the currents flowing through the plurality of battery packs 10_1-10_3 to provide the currents to the rack BMS 30. The current sensor 50 may transfer a sensing signal IS indicating the measured current to the rack BMS 30 for each predetermined monitoring period.

Configurations shown in FIG. 1 are only those necessary to describe an embodiment according to the present disclosure. The battery system 1 may include various configurations in addition to the configurations shown in FIG. 1.

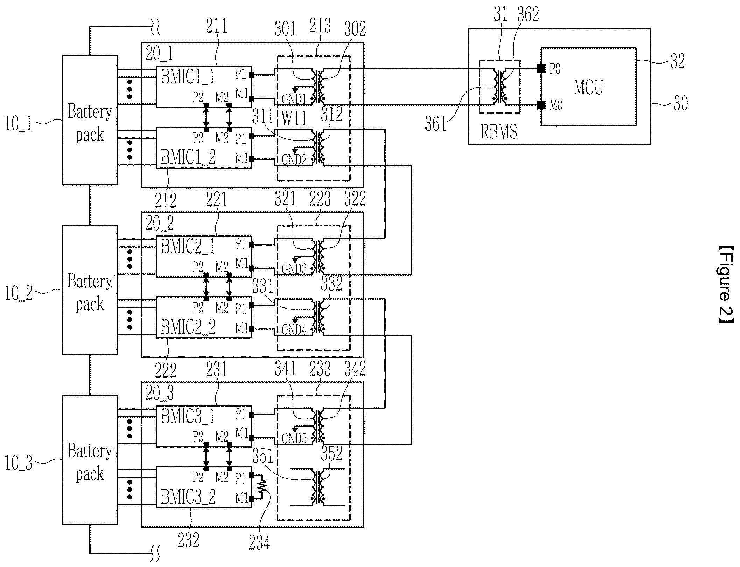

FIG. 2 is a view showing some configurations of the battery system according to an embodiment.

In FIG. 2, the plurality of BMSs 20_1, 20_2, and 20_3 and some configurations of the rack BMS 30 are illustrated.

Each of the plurality of BMSs 20_1, 20_2, and 20_3 may include each of two BMICs 211 and 212, two BMICs 221 and 222, and two BMICs 231 and 232 and each of dual transformers 213, 223, and 233. In FIG. 2, an embodiment in which a daisy chain is implemented so that the control command is transmitted in an order of the rack BMS 30, the BMS 20_1, the BMS 20_2, and the BMS 20_3 and the monitoring information generated in response to the control command is transmitted in an order of the BMS 20_3, the BMS 20_2, the BMS 20_1, and the rack BMS 30, is illustrated. This is an example for describing the present disclosure, and the present disclosure is not limited thereto. For example, the control command may be transmitted in an order of the rack BMS 30, the BMS 20_1, the BMS 20_2, and the BMS 20_3, and the monitoring information generated in response to the control command may be transmitted together with the control command. The BMS 20_3 may transmit the monitoring information generated by the BMS 20_3 to the rack BMS 30 following the control command and the received monitoring information of the BMS 20_1 and the BMS 20_2.

The rack BMS 30 may control charging and discharging and cell balancing of the battery system 1, a protection operation against an abnormal event of the battery system 1, and the like. The abnormal event may include an event such as an overvoltage, an overcurrent, or overheating occurring in the plurality of battery packs 10_1-10_3. The rack BMS 30 may include a transformer 31 and an MCU 32. The control command may be transmitted from the MCU 32 to the BMS 20_1 through the transformer 31, and the monitoring information may be received from the BMS 20_1 to the MCU 32 through the transformer 31. The MCU 32 may generate and transmit the control command to collect the monitoring information necessary to control the battery system 1, may control charging and discharging of the plurality of battery packs 10_1-10_3 using the received monitoring information, may determine a battery cell requiring cell balancing, may control the cell balancing, and may detect an abnormal event to control a protection operation (e.g., an operation opening the switch device 40).

The BMS 20_1 may include a BMIC1_1 211 and a BMIC1_2 212 and the dual transformer 213. The BMIC1_1 211 may be connected to a half of a plurality of battery cells of the battery pack 10_1, and may measure cell voltages of the connected battery cells. The BMIC1_2 212 may be connected to the remaining half of the plurality of battery cells of the battery pack 10_1, and may measure cell voltages of the connected battery cells. Each of the BMIC1_1 211 and the BMIC1_2 212 may include four pins P1, M1, P2, and M2. Two pins P1 and M1 of the BMIC1_1 211 may be connected to both ends of a first winding 301 of the dual transformer 213, and the two pins P1 and M1 of the BMIC1_2 212 may be connected to both ends of a third winding 311 of the dual transformer 213. Both ends of a second winding 302 of the dual transformer 213 may be connected to both ends of a first winding 361 of the transformer 31. Both ends of a second winding 362 of the transformer 31 may be connected to the MCU 32. Both ends of a fourth winding 312 of the dual transformer 213 may be connected to both ends of a second winding 322 of the dual transformer 223 of the BMS 20_2.

The first and second windings 301 and 302 of the dual transformer 213 may be insulated from each other and linked to each other, and the third and fourth windings 311 and 312 of the dual transformer 213 may be insulated from each other and linked to each other. In the present disclosure, the insulating link may mean that two windings constituting a transformer are insulated from each other and are coupled so that a signal is transferred between the two windings. A ground GND1 of the first winding 301 and a ground GND2 of the third winding 311 may be separated from each other. For example, the ground GND1 of the first winding 301 may be a negative electrode voltage level of a battery cell having the lowest potential among a plurality of battery cells connected to the BMIC1_1 211. The ground GND2 of the third winding 311 may be a negative electrode voltage level of a battery cell having the lowest potential among a plurality of battery cells connected to the BMIC1_2 212.

The BMS 20_2 may include a BMIC2_1 221 and a BMIC2_2 222 and the dual transformer 223. The BMIC2_1 221 may be connected to a half of a plurality of battery cells of the battery pack 10_2, and may measure cell voltages of the connected battery cells. The BMIC2_2 222 may be connected to the remaining half of the plurality of battery cells of the battery pack 10_2, and may measure cell voltages of the connected battery cells. Each of the BMIC2_1 221 and the BMIC2_2 222 may include four pins P1, M1, P2, and M2. Two pins P1 and M1 of the BMIC2_1 221 may be connected to both ends of a first winding 321 of the dual transformer 223, and the two pins P1 and M1 of the BMIC2_2 222 may be connected to both ends of a third winding 331 of the dual transformer 223. Both ends of the second winding 322 of the dual transformer 223 may be connected to both ends of a second winding 312 of the dual transformer 213 of the BMIC1_1 211.

The first and second windings 321 and 322 of the dual transformer 223 may be insulated from each other and linked to each other, and third and fourth windings 331 and 332 of the dual transformer 223 may be insulated from each other and linked to each other. A ground GND3 of the first winding 321 and a ground GND4 of the third winding 331 may be separated from each other. For example, the ground GND3 of the first winding 321 may be a negative electrode voltage level of a battery cell having the lowest potential among a plurality of battery cells connected to the BMIC2_1 221. The ground GND4 of the third winding 331 may be a negative electrode voltage level of a battery cell having the lowest potential among a plurality of battery cells connected to the BMIC2_2 222.

The BMS 20_3 may include a BMIC3_1 231 and a BMIC3_2 232 and the dual transformer 233. The BMIC3_1 231 may be connected to a half of a plurality of battery cells of the battery pack 10_3, and may measure cell voltages of the connected battery cells. The BMIC3_2 232 may be connected to the remaining half of the plurality of battery cells of the battery pack 10_3, and may measure cell voltages of the connected battery cells. Each of the BMIC3_1 231 and the BMIC3_2 232 may include four pins P1, M1, P2, and M2. Two pins P1 and M1 of the BMIC3_1 231 may be connected to both ends of a first winding 341 of the dual transformer 233, and a resistor 234 may be connected between two pins P1 and M1 of the BMIC3_2 232. The BMIC3_2 232 may be disposed at an end of the daisy chain, and may recognize that it is disposed at the end of the daisy chain by detecting a voltage difference generated by the resistor 234 between the two pins P1 and M1. Both ends of each of a first winding 351 and a second winding 352 of the dual transformer 223 may be floated, as shown in FIG. 2. The first winding 341 and a second winding 342 of the dual transformer 233 may be insulated from each other and linked to each other, and a ground GND5 of the first winding 341 may be a negative electrode voltage level of a battery cell having the lowest potential among a plurality of battery cells connected to the BMIC3_1 231. The BMS 20_3 may include a single transformer instead of the dual transformer 233.

The two pins P2 and M2 of the BMIC1_1 211 and the two pins P2 and M2 of the BMIC1_2 212 may be insulated from each other and linked to each other, the two pins P2 and M2 of the BMIC2_1 221 and the two pins P2 and M2 of the BMIC2_2 222 may be insulated from each other and linked to each other, and the two pins P2 and M2 of the BMIC3_1 231 and the two pins P2 and M2 of the BMIC3_2 232 may be insulated from each other and linked to each other.

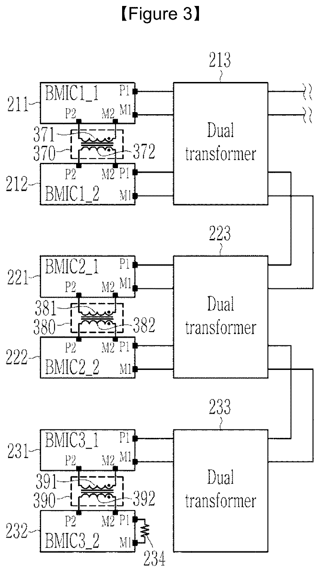

FIG. 3 illustrates configurations for communication between a plurality of battery management ICs (BMICs) according to an embodiment.

FIG. 3 illustrates a plurality of transformers 370, 380, and 390 that provide an insulating link between the BMIC1_1 211 and the BMIC1_2 212, an insulating link between the BMIC2_1 221 and the BMIC2_2 222, and an insulating link between the BMIC3_1 231 and the BMIC3_2 232.

Both ends of a first winding 371 of the transformer 370 may be connected to the two pins P2 and M2 of the BMIC1_1 211, and both ends of a second winding 372 of the transformer 370 may be connected to the two pins P2 and M2 of the BMIC1_2 212. Both ends of a first winding 381 of the transformer 380 may be connected to the two pins P2 and M2 of the BMIC2_1 221, and both ends of a second winding 382 of the transformer 380 may be connected to the two pins P2 and M2 of the BMIC2_2 222. Both ends of a first winding 391 of the transformer 390 may be connected to the two pins P2 and M2 of the BMIC3_1 231, and both ends of a second winding 392 of the transformer 390 may be connected to the two pins P2 and M2 of the BMIC3_2 232.

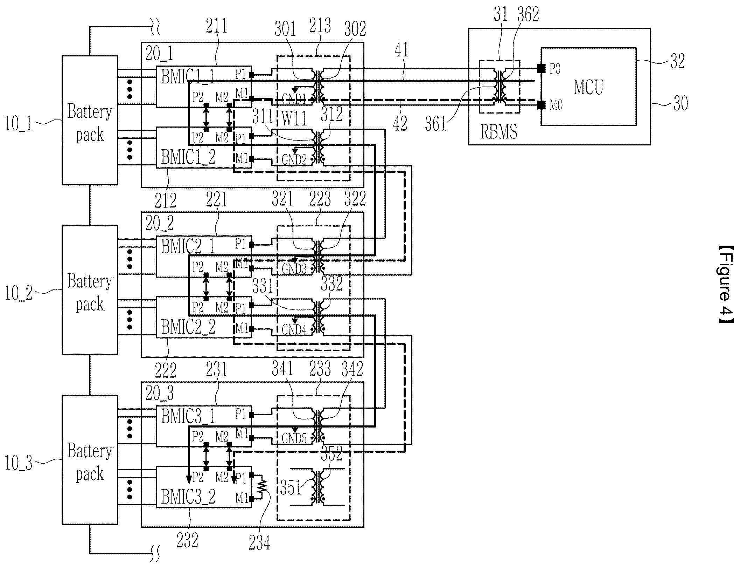

FIG. 4 shows a transmission order of a control command from the MCU to the plurality of BMICs according to an embodiment.

As indicated by two arrows 41 and 42 in FIG. 4, the control command may be transmitted from the MCU 32 in an order of the BMIC1_1 211, the BMIC1_2 212, the BMIC2_2 221, the BMIC3_2 222, the BMIC3_1 231, and the BMIC3_2 232.

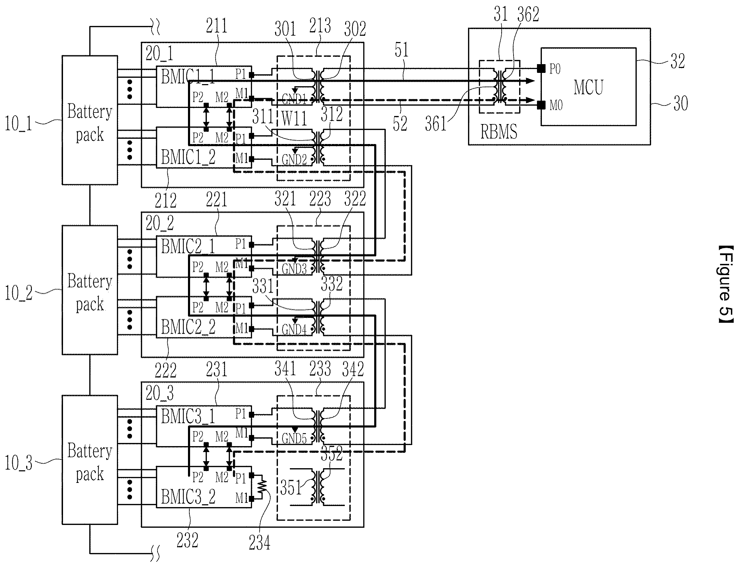

FIG. 5 shows a transmission order of monitoring information from the plurality of BMICs to the MCU according to an embodiment.

As indicated by two arrows 51 and 52 in FIG. 5, the monitoring information may be transmitted to the MCU 32 in an order of the BMIC3_2 232, the BMIC3_1 231, the BMIC2_2 222, the BMIC2_2 221, the BMIC1_2 212, and the BMIC1_1 211 in response to the control command.

The MCU 32 may generate the control command, and may supply a signal indicating the generated control command to the second winding 362 through two pins P0 and M0. The signal supplied to the second winding 362 may be transferred to the first winding 361 through an insulating link, and the signal transferred to the first winding 361 may be transmitted to the second winding 302. The signal transmitted to the second winding 302 may be transferred to the first winding 301 insulated from and linked to the second winding 302, and a signal according to a voltage at both ends of the first winding 301 may be provided to the BMIC1_1 211 through the two pins P1 and M1.

The BMIC1_1 211 may supply the signal received through the two pins P1 and M1 to the first winding 371 through the two pins P2 and M2. The signal supplied to the first winding 371 may be transferred to the second winding 372 through an insulating link, and a signal according to a voltage at both ends of the second winding 372 may be provided to the BMIC1_2 212 through the two pins P2 and M2. The BMIC1_2 212 may supply the signal received through the two pins P2 and M2 to a first winding 311 through the two pins P1 and M1. The signal supplied to the first winding 311 may be transferred to the second winding 312 through an insulating link, and the signal transferred to the second winding 312 may be transmitted to the second winding 322 of the dual transformer 223 of the BMS 20_2. The signal transmitted to the second winding 322 may be transferred to the first winding 321 of the dual transformer 223 insulated from and linked to the second winding 322, and a signal according to a voltage at both ends of the first winding 321 may be provided to the BMIC2_1 221 through the two pins P1 and M1 of the BMIC2_1 221.

The BMIC2_1 221 may supply the signal received through the two pins P1 and M1 to the first winding 381 through the two pins P2 and M2. The signal supplied to the first winding 381 may be transferred to the second winding 382 through an insulating link, and a signal according to a voltage at both ends of the second winding 382 may be provided to the BMIC2_2 222 through the two pins P2 and M2. The BMIC2_2 222 may supply the signal received through the two pins P2 and M2 to the first winding 331 through the two pins P1 and M1. The signal supplied to the first winding 331 may be transferred to the second winding 332 through an insulating link, and the signal transferred to the second winding 332 may be transmitted to the second winding 342 of the dual transformer 233 of the BMS 20_3. The signal transmitted to the second winding 342 may be transferred to the first winding 341 of the dual transformer 233 insulated from and linked to the second winding 342, and a signal according to a voltage at both ends of the first winding 341 may be provided to the BMIC3_1 231 through the two pins P1 and M1 of the BMIC3_1 231.

The BMIC3_1 231 may supply the signal received through the two pins P1 and M1 to the first winding 391 through the two pins P2 and M2. The signal supplied to the first winding 391 may be transferred to the second winding 392 through an insulating link, and a signal according to a voltage at both ends of the second winding 392 may be provided to the BMIC3_2 232 through the two pins P2 and M2. All of the BMIC1_1 211, the BMIC1_2 212, the BMIC2_2 221, the BMIC2_2 222, the BMIC3_1 231, and the BMIC3_2 232 that receive a signal indicating the control command may perform a monitoring operation according to the control command and may generate the monitoring information. The monitoring information may be transmitted to the MCU 32 in an order of the BMIC3_2 232 to the BMIC1_1 211 along the daisy chain.

The BMIC3_2 232 may supply a signal indicating the monitoring information to the second winding 392 through the two pins P2 and M2 of the BMIC3_2 232. The signal supplied to the second winding 392 may be transferred to the first winding 391 through an insulating link, and a signal according to a voltage at both ends of the first winding 391 may be provided to the BMIC3_1 231 through the two pins P2 and M2 of the BMIC3_1 231. The BMIC3_1 231 may update the monitoring information by adding monitoring information generated by the BMIC3_1 231 to a signal received from the BMIC3_2 232, and may supply a signal indicating the updated monitoring information to the first winding 341 through the two pins P1 and M1 of the BMIC3_1 231. The signal supplied to the first winding 341 may be transferred to the second winding 342 through an insulating link, and the signal transferred to the second winding 342 may be transmitted to the second winding 332. The signal transmitted to the second winding 332 may be transferred to the first winding 331 insulated from and linked to the second winding 332, and a signal according to a voltage at both ends of the first winding 331 may be provided to the BMIC2_2 222 through the two pins P1 and M1 of the BMIC2_2 222.

The BMIC2_2 222 may update the monitoring information by adding monitoring information generated by the BMIC2_2 222 to a signal received from the BMIC3_1 231, and may supply a signal indicating the updated monitoring information to the second winding 382 through the two pins P2 and M2 of the BMIC2_2 222. The signal supplied to the second winding 382 may be transferred to the first winding 381 through an insulating link, and a signal according to a voltage at both ends of the first winding 381 may be provided to the BMIC2_1 221 through the two pins P2 and M2 of the BMIC2_1 221. The BMIC2_1 221 may supply a signal obtained by adding monitoring information generated by the BMIC2_1 221 to a signal received from the BMIC2_2 222 to the first winding 321 through the two pins P1 and M1 of the BMIC2_1 221. The signal supplied to the first winding 321 may be transferred to the second winding 322 through an insulating link, and the signal transferred to the second winding 322 may be transmitted to the second winding 312. The signal transmitted to the second winding 312 may be transferred to the first winding 311 insulated from and linked to the second winding 312, and a signal according to a voltage at both ends of the first winding 311 may be provided to the BMIC1_2 212 through the two pins P1 and M1 of the BMIC1_2 212.

The BMIC1_2 212 may supply a signal obtained by adding monitoring information generated by the BMIC1_2 212 to a signal received from the BMIC2_1 221 to the second winding 372 through the two pins P2 and M2 of the BMIC1_2 212. The signal supplied to the second winding 372 may be transferred to the first winding 371 through an insulating link, and a signal according to a voltage at both ends of the first winding 371 may be provided to the BMIC1_1 211 through the two pins P2 and M2 of the BMIC1_1 211. The BMIC1_1 211 may supply a signal obtained by adding monitoring information generated by the BMIC1_1 211 to a signal received from the BMIC1_2 212 to the first winding 301 through the two pins P1 and M1 of the BMIC1_1 211. The signal supplied to the first winding 301 may be transferred to the second winding 302 through an insulating link, and the signal transferred to the second winding 302 may be transmitted to the first winding 361. The signal transmitted to the first winding 361 may be transferred to the second winding 362 insulated from and linked to the first winding 361, and a signal according to a voltage at both ends of the second winding 362 may be provided to the MCU 32 through the two pins P0 and M0.

The embodiment may transmit and receive signals between the rack BMS 30 and the plurality of BMSs 20_1, 20_2, and 20_3 according to the daisy chain method through the dual transformer. However, the present disclosure is not limited thereto, and an embodiment may transmit and receive signals between the rack BMS 30 and the plurality of BMSs 20_1, 20_2, and 20_3 according to a multi-channel method through the dual transformer.

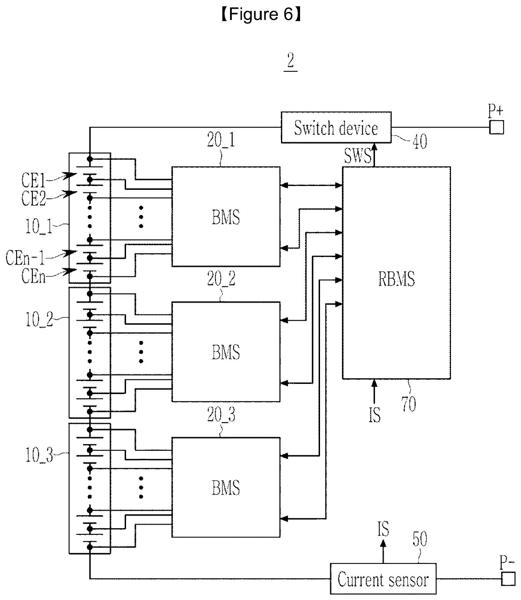

FIG. 6 is a block diagram showing a battery system according to an embodiment.

A battery system 2 may include a plurality of battery packs 10_1-10_3, a plurality of BMSs 60_1-60_3, a rack BMS 70, a switch device 40, and a current sensor 50. The same component as that of the embodiment of FIG. 1 among components of the battery system 2 according to the present embodiment is indicated by the same reference numeral in FIG. 6.

Each of the plurality of BMSs 60_1, 60_2, and 60_3 may be connected to each of the plurality of battery packs 10_1-10_3, may measure a cell voltage of each of a plurality of battery cells CE1-CEn of the battery pack, and may transmit cell voltages of the plurality of battery cells CE1-CEn of each of the plurality of battery packs 10_1-10_3 to the rack BMS 70 through a plurality of channels.

The rack BMS 70 may transmit a control command corresponding to the plurality of channels through the plurality of channels respectively corresponding to the plurality of BMSs 60_1, 60_2, and 60_3. Each of the plurality of BMSs 60_1, 60_2, and 60_3 may perform an operation according to the received control command, and may transmit monitoring information obtained by the performed operation to the rack BMS 70.

FIG. 6 illustrates that two channels are formed between each of the plurality of BMSs 60_1, 60_2, and 60_3 and the RBMS 70. This is because each of the plurality of BMSs 60_1, 60_2, and 60_3 includes two BMICs. The number of channels may be determined based on the number of BMICs included in each of the plurality of BMSs 60_1, 60_2, and 60_3.

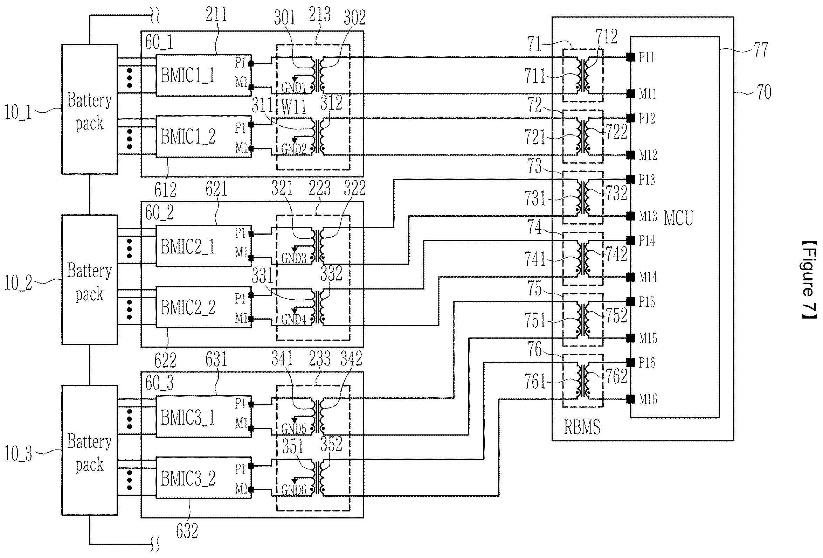

FIG. 7 is a view showing some configurations of the battery system according to an embodiment.

In FIG. 7, the plurality of BMSs 60_1, 60_2, and 60_3 and some configurations of the rack BMS 70 are illustrated.

Each of the plurality of BMSs 60_1, 60_2, and 60_3 may include each of two BMICs 611 and 612, two BMICs 621 and 622, and two BMICs 631 and 632 and each of dual transformers 213, 223, and 233.

The BMS 60_1 may include a BMIC1_1 611 and a BMIC1_2 612 and the dual transformer 213. The BMIC1_1 611 may be connected to a half of a plurality of battery cells of the battery pack 10_1, and may measure cell voltages of the connected battery cells. The BMIC1_2 612 may be connected to the remaining half of the plurality of battery cells of the battery pack 10_1, and may measure cell voltages of the connected battery cells. Each of the BMIC1_1 611 and the BMIC1_2 612 may include two pins P1 and M1. The two pins P1 and M1 of the BMIC1_1 611 may be connected to both ends of a first winding 301 of the dual transformer 213, and the two pins P1 and M1 of the BMIC1_2 612 may be connected to both ends of a third winding 311 of the dual transformer 213. Grounds GND1 and GND2 of the first and third windings 301 and 311 may be separated from each other. Both ends of a second winding 302 of the transformer 213 may be connected to a first winding 711 of a transformer 71, and both ends of a second winding 712 of the transformer 71 may be connected to an MCU 77 through two pins P11 and M11. Both ends of a fourth winding 312 of the transformer 213 may be connected to a first winding 721 of a transformer 72, and both ends of a second winding 722 of the transformer 72 may be connected to the MCU 77 through two pins P12 and M12.

The BMS 60_2 may include a BMIC2_1 621 and a BMIC2_2 622 and the dual transformer 223. The BMIC2_1 621 may be connected to a half of a plurality of battery cells of the battery pack 10_2, and may measure cell voltages of the connected battery cells. The BMIC2_2 622 may be connected to the remaining half of the plurality of battery cells of the battery pack 10_2, and may measure cell voltages of the connected battery cells. Each of the BMIC2_1 621 and the BMIC2_2 622 may include two pins P1 and M1. The two pins P1 and M1 of the BMIC2_1 621 may be connected to both ends of a first winding 321 of the dual transformer 223, and the two pins P1 and M1 of the BMIC2_2 622 may be connected to both ends of a third winding 331 of the dual transformer 223. Grounds GND3 and GND4 of the first and third windings 321 and 331 may be separated from each other. Both ends of a second winding 322 of the transformer 223 may be connected to a first winding 731 of a transformer 73, and both ends of a second winding 732 of the transformer 73 may be connected to the MCU 77 through two pins P13 and M13. Both ends of a fourth winding 332 of the transformer 223 may be connected to a first winding 741 of a transformer 74, and both ends of a second winding 742 of the transformer 74 may be connected to the MCU 77 through two pins P14 and M14.

The BMS 60_3 may include a BMIC3_1 631 and a BMIC3_2 632 and the dual transformer 233. The BMIC3_1 631 may be connected to a half of a plurality of battery cells of the battery pack 10_3, and may measure cell voltages of the connected battery cells. The BMIC3_2 632 may be connected to the remaining half of the plurality of battery cells of the battery pack 10_3, and may measure cell voltages of the connected battery cells. Each of the BMIC3_1 631 and the BMIC3_2 632 may include two pins P1 and M1. The two pins P1 and M1 of the BMIC3_1 631 may be connected to both ends of a first winding 341 of the double transformer 233, and the two pins P1 and M1 of the BMIC3_2 632 may be connected to both ends of a third winding 351 of the double transformer 233. Grounds GND5 and GND6 of the first and third windings 341 and 351 may be separated from each other. Both ends of a second winding 342 of the transformer 233 may be connected to a first winding 751 of a transformer 75, and both ends of a second winding 752 of the transformer 75 may be connected to the MCU 77 through two pins P15 and M15. Both ends of a fourth winding 352 of the transformer 233 may be connected to a first winding 761 of a transformer 76, and both ends of a second winding 762 of the transformer 76 may be connected to the MCU 77 through two pins P16 and M16.

The MCU 77 may transmit the control command to each of the plurality of BMICs 611, 612, 621, 622, 631, and 632, each of the plurality of BMICs 611, 612, 622, 631, and 632 may perform a monitoring operation according to the control command to generate monitoring information, and each of the plurality of BMICs 611, 612, 621, 622, 631, and 632 may transmit a signal indicating the monitoring information generated in response to the control command to the MCU 77. Signal transmission/reception methods between the MCU 77 and the plurality of BMICs 611, 612, 621, 622, 631, and 632 may be the same.

For example, the MCU 77 may transmit the control command to the BMIC2_1 621, and may receive the monitoring information from the BMIC2_1 621 in response to the control command. The MCU 77 may generate the control command, and may supply a signal indicating the generated control command to the second winding 732 through the two pins P13 and M13. The signal supplied to the second winding 732 may be transferred to the first winding 731 through an insulating link, and the signal transferred to the first winding 731 may be transmitted to the second winding 322. The signal transmitted to the second winding 322 may be transferred to the first winding 321 insulated from and linked to the second winding 322, and a signal according to a voltage at both ends of the first winding 321 may be provided to the BMIC2_1 621 through the two pins P1 and M1 of the BMIC2_1 621.

The BMIC2_1 621 may perform the monitoring operation according to the control command, may generate the monitoring information, and may supply a signal indicating the generated monitoring information to the first winding 321 through the two pins P1 and M1 of the BMIC2_1 621. The signal supplied to the first winding 321 may be transferred to the second winding 322 through an insulating link, and the signal transferred to the second winding 322 may be transmitted to the first winding 731. The signal transmitted to the first winding 731 may be transferred to the second winding 732 insulated from and linked to the first winding 731, and a signal according to a voltage at both ends of the second winding 732 may be provided to the MCU 77 through the two pins P13 and M13.

In the same manner, signal transmission and reception between the MCU 77 and each of the plurality of BMICs 611, 612, 621, 622, 631, and 632 may be performed.

The embodiment of the present disclosure may perform bidirectional communication using the dual transformer having an integrated structure in which the ground is separated instead of two single transformers. Accordingly, it is possible to secure an extra space on the PCB and reduce a manufacturing cost when the BMS is manufactured.

While this disclosure has been described in connection with what is presently considered to be practical embodiments, it should be understood that the disclosure is not limited to the disclosed embodiments, but, on the contrary, is intended to cover various modifications and equivalent arrangements included within the spirit and scope of the appended claims.

## Claims

1. A battery system comprising:
a plurality of battery packs that includes a plurality of battery cells;
a plurality of battery management systems that are connected to the plurality of battery packs; and
a rack battery management system that transmits a control command to the plurality of battery management systems and receives a plurality of monitoring information from the plurality of battery management systems in response to the control command,
wherein each of the plurality of battery management systems includes two battery management ICs connected to battery packs corresponding thereto among the plurality of battery packs to generate monitoring information for the corresponding battery packs according to the control command and a dual transformer including a first winding connected to a first battery management IC among the two battery management ICs and a second winding connected to a second battery management IC among the two battery management ICs, and a ground of the first winding and a ground of the second winding are separated from each other.

2. The battery system of claim 1, wherein a first dual transformer of a first battery management system among the plurality of battery management systems includes a third winding insulated from and linked to the first winding and connected to the rack battery management system and a fourth winding insulated from and linked to the second winding and connected to a second battery management system among the plurality of battery management systems.

3. The battery system of claim 2, wherein the second battery management system comprises:
a second dual transformer that includes a fifth winding insulated from and linked to the fourth winding and a sixth winding insulated from and linked to the fifth winding; and
a third battery management IC that is connected to the sixth winding.

4. The battery system of claim 3, wherein the second battery management system further includes a fourth battery management IC that is connected to a battery pack corresponding thereto among the plurality of battery packs, the second dual transformer further includes a seventh winding insulated from and linked to the fourth battery management IC and an eighth winding insulated from and linked to the seventh winding, a ground of the sixth winding and a ground of the seventh winding are separated from each other, and each of the third battery management IC and the fourth battery management IC is connected to a half of a plurality of battery cells of the corresponding battery pack.

5. The battery system of claim 2, wherein the first battery management system includes a ninth winding and a tenth winding insulated and linked between the first battery management IC and the second battery management IC.

6. The battery system of claim 5, wherein a signal transmitted to the third winding is provided to the first battery management IC through the first winding, the first battery management IC transfers the signal to the second battery management IC through the ninth winding and the tenth winding, and the second battery management IC transmits the signal to the second battery management system through the second winding and the fourth winding.

7. The battery system of claim 6, wherein the signal transmitted to the third winding indicates the control command.

8. The battery system of claim 5, wherein a first signal transmitted from the second battery management system to the fourth winding is provided to the second battery management IC through the second winding, the second battery management IC transfers a second signal adding monitoring information generated by the second battery management IC to the first signal to the first battery management IC through the ninth winding and the tenth winding, and the first battery management IC transmits a third signal adding monitoring information generated by the first battery management IC to the second signal to the rack battery management system through the first winding and the third winding.

9. The battery system of claim 8, wherein the first signal includes monitoring information of the second battery management system.

10. The battery system of claim 5, wherein the second battery management system includes a third battery management IC and a fourth battery management IC connected to a battery pack corresponding thereto, a second dual transformer including a fifth winding connected to the fourth winding, a sixth winding insulated from and linked to the fifth winding and connected to the third battery management IC, a seventh winding connected to the fourth battery management IC, an eighth winding insulated from and linked to the seventh winding, and an eleventh winding and a twelfth winding insulated and linked between the third battery management IC and the fourth battery management IC, and
a ground of the sixth winding and a ground of the seventh winding are separated from each other.

11. The battery system of claim 10, wherein a signal transmitted to the fifth winding is provided to the third battery management IC through the sixth winding,
the third battery management IC transfers the signal to the fourth battery management IC through the eleventh winding and the twelfth winding, and
the fourth battery management IC transmits the signal to a third battery management system among the plurality of battery management systems through the seventh winding and the eighth winding.

12. The battery system of claim 10, wherein a first signal transmitted from a third battery management system among the plurality of battery management systems to the eighth winding is provided to the fourth battery management IC through the seventh winding,
the fourth battery management IC transfers a second signal adding monitoring information generated by the fourth battery management IC to the first signal to the third battery management IC through the eleventh winding and the twelfth winding, and
the third battery management IC transmits a third signal adding monitoring information generated by the third battery management IC to the second signal to the first battery management system through the fifth winding and the sixth winding.

13. The battery system of claim 12, wherein the first signal includes monitoring information of the third battery management system.

14. The battery system of claim 1, wherein the dual transformer of each of the plurality of battery management systems further includes:
a third winding insulated from and linked to the first winding and connected to the rack battery management system, and
a fourth winding insulated from and linked to the second winding and connected to the rack battery management system.
